(19)

Europäisches Patentamt

European Patent Office

Office européen des brevets

(11) **EP 4 458 653 A1**

(12) **EUROPEAN PATENT APPLICATION**

(43) Date of publication:
**06.11.2024 Bulletin 2024/45**

(21) Application number: **24170922.9**

(22) Date of filing: **18.04.2024**

(51) International Patent Classification (IPC):
**B62D 55/21** (2006.01)

(52) Cooperative Patent Classification (CPC):
**B62D 55/213**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2023 TW 112203876 U**

(71) Applicant: **Everpads Co., Ltd.**
**40768 Taichung (TW)**

(72) Inventor: **CHIANG, Chun-Li**
**40768 Taichung (TW)**

(74) Representative: **Nederlandsch Octrooibureau**
**P.O. Box 29720**
**2502 LS The Hague (NL)**

(54) **TRACK LINK STRUCTURE AND TRACK LINK ASSEMBLY**

(57)     A track link structure (100) has an outer surface (101) and an inner surface (102). The track link structure (100) includes a first main body (110) and a second main body (120). The first main body (110) includes a first track link portion (130) and a first connecting portion (140). The first track link portion (130) includes a first shaft hole (131). The first connecting portion (140) includes a first inclined plane structure (141) and a first connecting structure (142). The second main body (120) includes a sec- ond track link portion (150) and a second connecting portion (160). The second track link portion (150) includes a second shaft hole (151). The second connecting portion (160) includes a second inclined plane (161) structure and a second connecting structure (162). The first con- necting portion (140) is correspondingly connected to the second connecting portion (160) so as to assemble the first main body (110) and the second main body (120) to form the track link structure (100).

Fig. 1

EP 4 458 653 A1

# Description

## BACKGROUND

Technical Field

The present disclosure relates to a track link structure and a track link assembly. More particularly, the present disclosure relates to a track link structure and a track link assembly applied to heavy caterpillar vehicles.

Description of Related Art

A track link assembly is a structure formed by a plurality of track links and a plurality of track shoe pads that are fixed in series by bushings and pins. By engaging external tooth structures of a sprocket, the track link assembly can use a power generated by the sprocket to drive each of the track links to rotate relatively within a certain range, so that the track link assembly has the characteristic of deformability. When the track link assembly is faced with rough terrain, the track shoe pads of the track link assembly can still fit tightly to the ground to allow the movement of a vehicle. Therefore, the track link assembly is widely used in heavy caterpillar vehicles such as bulldozers, excavators, and tanks.

Most of the conventional track links are integrally formed. In the assembly process of the track link assembly, fasteners are manually hammered to connect the track links and the track shoe pads. When the track links or the track shoe pads are worn due to friction and impact, it is still necessary to use a hammer method to separate the track links and the track shoe pads, thus making the conventional track links relatively laborious and time-consuming in the maintenance process.

Accordingly, a split-type track link has been developed to overcome the aforementioned problem. The split-type track link includes a left half-link and a right half-link, and the fasteners are used to assemble the left half-link and the right half-link to form a complete track link. When the track link assembly needs to be disassembled for repair or maintenance, parts of the track links are removed to disassemble the track link assembly by removing the fasteners connecting the left half-link and the right half-link. Thus, the convenience of the disassembly process of the track link assembly can be improved. However, because the connecting surfaces of the left half-link and the right half-link of the split-type track link are planes, the left half-link and the right half-link are prone to shaking during the operation of the heavy caterpillar vehicles. When a torque becomes too great, the fasteners are broken, and the track link assembly may fall off from the heavy caterpillar vehicles.

Therefore, how to provide a track link that is easy to disassemble and has improved structural stability, thereby extending the service life of the track link, is still an economically valuable demand in the market.

# SUMMARY

According to one aspect of the present disclosure, a track link structure, which has an outer surface and an inner surface, includes a first mainbody and a second mainbody. The first mainbody includes a first track link portion and a first connecting portion. The first track link portion includes a first shaft hole. The first connecting portion is integrally connected to the first track link portion, wherein a height of the first connecting portion perpendicular to a major axis of the track link structure is smaller than a maximum height of the track link structure, and the first connecting portion includes a first inclined plane structure and a first connecting structure. The first inclined plane structure is disposed on a top surface of the first connecting portion. The first connecting structure is integrally disposed on the first inclined plane structure. The second mainbody includes a second track link portion and a second connecting portion. The second track link portion includes a second shaft hole. The second connecting portion is integrally connected to the second track link portion, wherein a height of the second connecting portion perpendicular to the major axis of the track link structure is smaller than the maximum height of the track link structure, and the second connecting portion includes a second inclined plane structure and a second connecting structure. The second inclined plane structure is disposed on a bottom surface of the second connecting portion. The second connecting structure is integrally disposed on the second inclined plane structure. The first inclined plane structure is tilted from the outer surface toward the inner surface or from the inner surface toward the outer surface, and the second inclined plane structure is tilted from the outer surface toward the inner surface or from the inner surface toward the outer surface. The first connecting portion is correspondingly connected to the second connecting portion so as to assemble the first mainbody and the second mainbody to form the track link structure. The first inclined plane structure corresponds to the second inclined plane structure, and the first connecting structure matches the second connecting structure.

According to the track link structure of the foregoing aspect, wherein when the first connecting portion can be correspondingly connected to the second connecting portion, the height of the first connecting portion perpendicular to the major axis of the track link structure is H11, the height of the second connecting portion perpendicular to the major axis of the track link structure is H12, and the maximum height of the track link structure is Hmax1, the following condition can be satisfied: H11 + H12 ≤ Hmax1.

According to the track link structure of the foregoing aspect, wherein the first connecting structure can be a groove element, the second connecting structure can be a block element, and when the first connecting portion can be correspondingly connected to the second connecting portion, the second connecting structure can be engaged with the first connecting structure.

According to the track link structure of the foregoing aspect, wherein the first connecting structure can be a block element, the second connecting structure can be a groove element, and when the first connecting portion can be correspondingly connected to the second connecting portion, the first connecting structure can be engaged with the second connecting structure.

According to the track link structure of the foregoing aspect, wherein the first connecting portion can further include two hole slots, and the two hole slots can be separately opened on the top surface of the first connecting portion. The second connecting portion can further include two through holes, the two through holes can be penetratingly disposed at the second connecting portion, and the two through holes can correspond to the two hole slots.

According to the track link structure of the foregoing aspect, wherein the first mainbody can further include a protruding structure. The protruding structure can be integrally disposed on the first track link portion, wherein the protruding structure can surround outside of the first shaft hole and protrude from the outer surface.

According to the track link structure of the foregoing aspect, wherein the first mainbody can further include a groove structure. The groove structure can be recessed on the inner surface, and the groove structure can be communicated with the first shaft hole.

According to the track link structure of the foregoing aspect, wherein the first inclined plane structure can be tilted from the inner surface toward the outer surface, and the second inclined plane structure can be tilted from the inner surface toward the outer surface.

According to another aspect of the present disclosure, a track link assembly includes at least two track pin assemblies, at least one of the track link structure according to the aforementioned aspect and at least one master link structure. Each of the track pin assemblies includes a bushing and a pin, and the pin is inserted inside the bushing. The at least one master link structure includes a first opening and a second opening. The pin of one of the track pin assemblies is inserted into the first opening from an outer surface of the master link structure. The pin of another one of the track pin assemblies is inserted into the second opening from the outer surface of the master link structure, and the first opening and the second opening are separated from each other. The one of the track pin assemblies passes through the first shaft hole from the outer surface of the track link structure and then is disposed in the first opening of the master link structure, and the another one of the track pin assemblies passes through the second shaft hole from the outer surface of the track link structure and then is disposed in the second opening of the master link structure.

According to the track link assembly of the foregoing aspect, wherein the master link structure can further include a first master link mainbody and a second master link mainbody. The first master link mainbody can include a first master link portion and a first binding portion. The first opening can be disposed on the first master link portion. The first binding portion can be integrally connected to the first master link portion, wherein a height of the first binding portion perpendicular to a major axis of the master link structure can be smaller than a maximum height of the master link structure, and the first binding portion can include a first planar structure and a first binding structure. The first planar structure can be disposed on a top surface of the first binding portion, wherein the first planar structure can be parallel to an upper surface of the master link structure. The first binding structure can be integrally disposed on the first planar structure. The second master link mainbody can include a second master link portion and a second binding portion. The second opening can be disposed on the second master link portion. The second binding portion can be integrally connected to the second master link portion, wherein a height of the second binding portion perpendicular to the major axis of the master link structure can be smaller than the maximum height of the master link structure, and the second binding portion can include a second planar structure and a second binding structure. The second planar structure can be disposed on a bottom surface of the second binding portion, wherein the second planar structure can be parallel to a lower surface of the master link structure. The second binding structure can be integrally disposed on the second planar structure. The first binding portion can be correspondingly connected to the second binding portion so as to assemble the first master link mainbody and the second master link mainbody to form the master link structure, and the first binding structure can match the second binding structure.

According to the track link assembly of the foregoing aspect, wherein when the first binding portion can be correspondingly connected to the second binding portion, the height of the first binding portion perpendicular to the major axis of the master link structure is $H21$, the height of the second binding portion perpendicular to the major axis of the master link structure is $H22$, and the maximum height of the master link structure is $Hmax2$, the following condition can be satisfied: $H21 + H22 < Hmax2$.

According to the track link assembly of the foregoing aspect, wherein the first binding structure can be a groove element, the second binding structure can be a block element, and when the first binding portion can be correspondingly connected to the second binding portion, the second binding structure can be engaged with the first binding structure.

According to the track link assembly of the foregoing aspect, wherein the first binding structure can be a block element, the second binding structure can be a groove element, and when the first binding portion can be correspondingly connected to the second binding portion, the first binding structure can be engaged with the second binding structure.

According to the track link assembly of the foregoing aspect, wherein the first binding portion can further include two opening slots, and the two opening slots can be separately opened on the top surface of the first binding portion. The second binding portion can further include two penetrating holes, the two penetrating holes can be penetratingly disposed at the second binding portion, and the two penetrating holes can correspond to the two opening slots.

According to the track link assembly of the foregoing aspect, wherein the master link structure can further include an extending structure. The extending structure can surround outside of the first opening and protrude from the outer surface of the master link structure.

According to the track link assembly of the foregoing aspect, wherein the master link structure can further include a slotted structure. The slotted structure can be recessed on an inner surface of the master link structure, and the slotted structure can be communicated with the first opening.

According to further another aspect of the present disclosure, a track link assembly includes at least two track pin assemblies and at least two of the track link structures according to the aforementioned aspect. Each of the track pin assemblies includes a bushing and a pin, and the pin is inserted inside the bushing. One of the track pin assemblies passes through the first shaft hole of one of the track link structures from the outer surface of the one of the track link structures and then is disposed in the first shaft hole of another one of the track link structures, and another one of the track pin assemblies passes through the second shaft hole of the one of the track link structures from the outer surface of the one of the track link structures and then is disposed in the second shaft hole of the another one of the track link structures.

According to the track link assembly of the foregoing aspect, wherein the first connecting structure of the one of the track link structures can be a groove element, the second connecting structure of the one of the track link structures can be a block element, the first connecting structure of the another one of the track link structures can be the groove element, and the second connecting structure of the another one of the track link structures can be the block element.

According to the track link assembly of the foregoing aspect, wherein the first inclined plane structure of the one of the track link structures can be tilted from the inner surface toward the outer surface of the one of the track link structures, and the first inclined plane structure of the another one of the track link structures can be tilted from the inner surface toward the outer surface of the another one of the track link structures.

According to the track link assembly of the foregoing aspect, wherein an inclined angle of the first inclined plane structure of the one of the track link structures can be the same as an inclined angle of the first inclined plane structure of the another one of the track link structures.

## BRIEF DESCRIPTION OF THE DRAWINGS

The present disclosure can be more fully understood by reading the following detailed description of the embodiment, with reference made to the accompanying drawings as follows:

Fig. 1 is a schematic view of a track link structure according to the first embodiment of the present disclosure.

Fig. 2 is an exploded view of the track link structure of Fig. 1.

Fig. 3 is a partial schematic view of a track link assembly according to the second embodiment of the present disclosure.

Fig. 4 is a partial schematic view of a track link assembly according to the third embodiment of the present disclosure.

Fig. 5 is an exploded view of a master link structure of Fig. 4.

Fig. 6 is a partial schematic view of a track link structure and the master link structure of the track link assembly of Fig. 4.

Fig. 7 is a partial schematic view of a track link assembly according to the fourth embodiment of the present disclosure.

Fig. 8 is another partial schematic view of the track link assembly of Fig. 7.

Fig. 9 is further another partial schematic view of the track link assembly of Fig. 7.

Fig. 10 is a partial assembling schematic view of the track link assembly of Fig. 7.

## DETAILED DESCRIPTION

The present disclosure will be further exemplified by the following specific embodiments. However, the embodiments can be applied to various inventive concepts and can be embodied in various specific ranges. The specific embodiments are only for the purposes of description and are not limited to these practical details thereof. Furthermore, in order to simplify the drawings, some conventional structures and elements will be illustrated in the drawings by a simple and schematic way. The duplicated elements may be denoted by the same number or similar numbers.

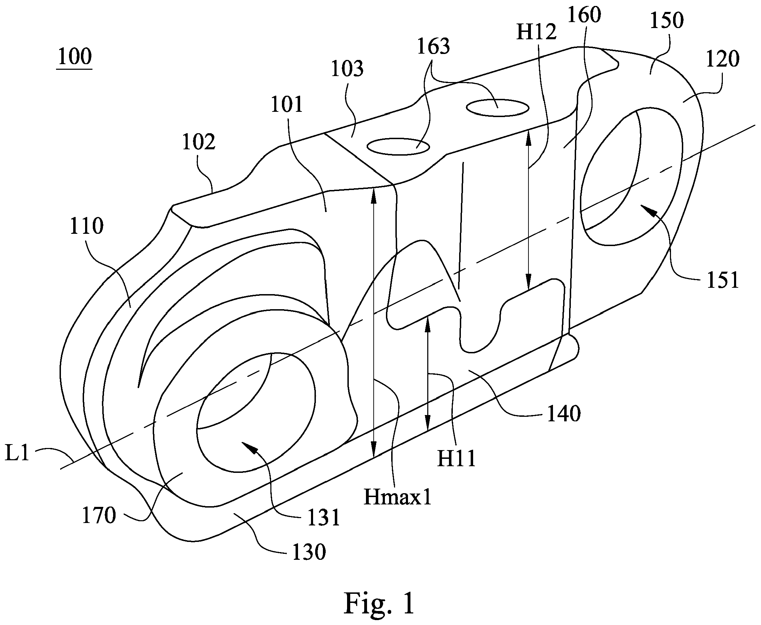

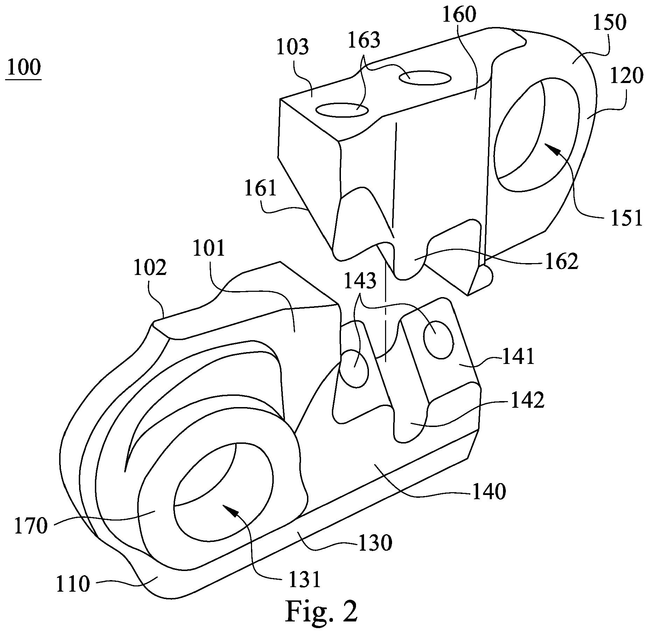

Reference is made to Fig. 1 and Fig. 2. Fig. 1 is a schematic view of a track link structure 100 according to the first embodiment of the present disclosure. Fig. 2 is an exploded view of the track link structure 100 of Fig. 1. The track link structure 100 has an outer surface 101 and an inner surface 102, and the track link structure 100 includes a first mainbody 110 and a second mainbody 120.

The first mainbody 110 includes a first track link portion 130 and a first connecting portion 140. The first track link portion 130 includes a first shaft hole 131, wherein the first shaft hole 131 is penetrated from the outer surface 101 toward the inner surface 102 of the track link structure 100 and then is disposed at the first track link portion 130 so as to facilitate the connection between the at least two of the track link structures 100. The first connecting portion 140 is integrally connected to the first track link portion 130, wherein a height H11 of the first connecting portion 140 perpendicular to a major axis L1 of the track link structure 100 is smaller than a maximum height Hmax1 of the track link structure 100. Therefore, the structural stability of the track link structure 100 during the use thereof can be enhanced. As shown in Fig. 2, the first connecting portion 140 includes a first inclined plane structure 141 and a first connecting structure 142. The first inclined plane structure 141 is disposed on a top surface (its reference numeral is omitted) of the first connecting portion 140. The first connecting structure 142 is integrally disposed on the first inclined plane structure 141.

The second mainbody 120 includes a second track link portion 150 and a second connecting portion 160. The second track link portion 150 includes a second shaft hole 151, wherein the second shaft hole 151 is penetrated from the outer surface 101 toward the inner surface 102 of the track link structure 100 and then is disposed at the second track link portion 150 so as to facilitate the connection between the at least two of the track link structures 100. As shown in Fig. 1, the second connecting portion 160 is integrally connected to the second track link portion 150, wherein a height H12 of the second connecting portion 160 perpendicular to the major axis L1 of the track link structure 100 is smaller than the maximum height Hmax1 of the track link structure 100. Therefore, the structural stability of the track link structure 100 during the use thereof can be enhanced. As shown in Fig. 2, the second connecting portion 160 includes a second inclined plane structure 161 and a second connecting structure 162. The second inclined plane structure 161 is disposed on a bottom surface (its reference numeral is omitted) of the second connecting portion 160. The second connecting structure 162 is integrally disposed on the second inclined plane structure 161.

Particularly, in the track link structure 100, both the first inclined plane structure 141 and the second inclined plane structure 161 are tilted from the inner surface 102 toward the outer surface 101 of the track link structure 100, and the first inclined plane structure 141 corresponds to the second inclined plane structure 161 so as to facilitate the corresponding connection between the first connecting portion 140 and the second connecting portion 160. Therefore, by the arrangement of the first connecting portion 140 including the first inclined plane structure 141 and the second connecting portion 160 including the second inclined plane structure 161, the relative displacement and other shaking phenomena between the first mainbody 110 and the second mainbody 120 during the use of the track link structure 100 can be reduced, so that the structural stability of the track link structure 100 can be enhanced, and the risk of a track link assembly falling from heavy caterpillar vehicles can be reduced.

Furthermore, although it is not shown in the figures, in other embodiments, both the first inclined plane structure and the second inclined plane structure can be tilted from the outer surface of the track link structure toward the inner surface of the track link structure so as to satisfy different requirements, and the present disclosure is not limited thereto.

As shown in Fig. 1 and Fig. 2, the first connecting portion 140 is correspondingly connected to the second connecting portion 160 so as to assemble the first mainbody 110 and the second mainbody 120 to form the track link structure 100, wherein the first connecting portion 140 is connected to the second connecting portion 160 by the first connecting structure 142 and the second connecting structure 162, and the first connecting structure 142 matches the second connecting structure 162. In detail, in the track link structure 100, the first connecting structure 142 is a groove element, the second connecting structure 162 is a block element. When the first connecting portion 140 is correspondingly connected to the second connecting portion 160, the second connecting structure 162 is engaged with the first connecting structure 142. By the arrangement that the track link structure 100 includes the first mainbody 110 and the second mainbody 120, the convenience of the disassembly process of the track link assembly including the track link structure 100 of the present disclosure can be improved. Further, a user can disassemble the track link assembly by removing a part of the track link structure 100 to facilitate the repair or the maintenance of the heavy caterpillar vehicles.

Furthermore, although it is not shown in the figures, in other embodiments, the first connecting structure can be a block element, and the second connecting structure can be a groove element, so that when the first connecting portion is correspondingly connected to the second connecting portion, the first connecting structure can be engaged with the second connecting structure. Moreover, the shape of the block element can substantially be a tooth, a cylinder, a cube, a triangular prism, or a rectangular prism. The block element with different shapes can be used to increase or decrease the friction between components to achieve different purposes, but the present disclosure is not limited thereto.

As shown in Fig. 1, when the first connecting portion 140 is correspondingly connected to the second connecting portion 160, the height H11 of the first connecting portion 140 perpendicular to the major axis L1 of the track link structure 100, the height H12 of the second connecting portion 160 perpendicular to the major axis L1 of the track link structure 100 and the maximum height Hmax1 of the track link structure 100 can satisfy the following condition: H11 + H12 ≤ Hmax1. Therefore, the structural stability of the track link structure 100 can be enhanced, and a surface of the track link structure 100 can be tightly contacted with a track shoe pad so as to reduce the possibility of breakage of the track link assembly during the operation of the heavy caterpillar vehicles. Preferably, the following condition can be satisfied: H11 + H12 = Hmax1.

As shown in Fig. 2, the first connecting portion 140 can further include two hole slots 143, and the two hole slots 143 are separately opened on the top surface of the first connecting portion 140. The second connecting portion 160 can further include two through holes 163, and the two through holes 163 are penetratingly disposed at the second connecting portion 160, wherein the two through holes 163 are separately penetrated from a top surface 103 of the second connecting portion 160 toward the bottom surface of the second connecting portion 160 and then are disposed on the second connecting portion 160, and the two through holes 163 respectively correspond to the two hole slots 143. In detail, fasteners (not shown) can be respectively inserted into each of the through holes 163 and each of the hole slots 143, so that the first connecting portion 140 is tightly connected to the second connecting portion 160, and thus it is favorable for the first mainbody 110 to be corresponding connected to the second mainbody 120 to form the track link structure 100. Therefore, the structural stability of the track link structure 100 can be enhanced, and the convenience of the assembly or the disassembly of the track link structure 100 can also be enhanced.

Further, in other embodiments, each of the hole slots and each of the through holes can have an internal thread structure, so that an external thread structure of the fastener can be engaged with the internal thread structure of the hole slot and the internal thread structure of the through hole. Thus, the convenience of the assembly or the disassembly of the track link structure can be enhanced, but the present disclosure is not limited thereto. Furthermore, the fastener can be a screw or a bolt as required. Preferably, the fastener can be a screw, so that the fastener can be used without an additional auxiliary fixing element, such as a nut, and the possibility of loosening of the nut due to the vibration and other environmental factors can be prevented.

Further, as shown in Fig. 1, the first mainbody 110 can further include a protruding structure 170 and a groove structure (not shown). The protruding structure 170 is integrally disposed on the first track link portion 130, wherein the protruding structure 170 can surround outside of the first shaft hole 131 and protrude from the outer surface 101 of the track link structure 100, and thus it is favorable for enhancing the structure strength of the first shaft hole 131. The groove structure is recessed on the inner surface 102 of the track link structure 100, and the groove structure can be communicated with the first shaft hole 131. Therefore, by the arrangement that the first mainbody 110 includes the protruding structure 170 and the groove structure, the connection stability between the track link structures 100 connected by track pin assemblies can be enhanced.

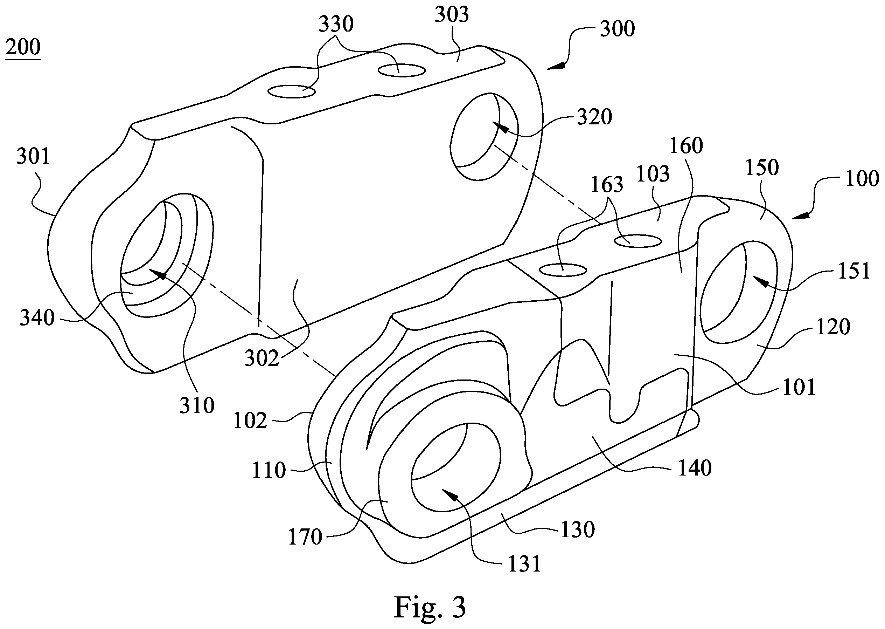

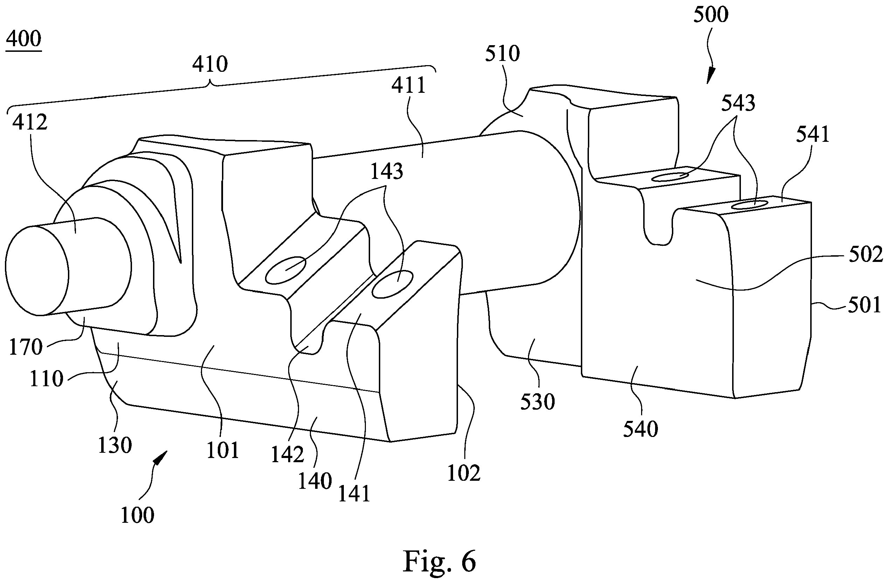

Reference is made to Fig. 3, which is a partial schematic view of a track link assembly 200 according to the second embodiment of the present disclosure. The track link assembly 200 includes at least two track pin assemblies (not shown), at least one of the track link structure 100 according to the aforementioned embodiment and at least one master link structure 300. In detail, the number of sections required for the track link assembly 200 can be selected based on the actual usage conditions, and only one section of the track link assembly 200 is shown in Fig. 3. Further, the connecting relationship between the track pin assemblies, the track link structure 100, and the master link structure 300 is the same as that of Fig. 6, Fig. 8, and Fig. 9. To simplify the description, the connecting relationship between the track pin assemblies, the track link structure 100, and the master link structure 300 is not shown in Fig. 3.

Each of the track pin assemblies includes a bushing and a pin, and the pin is inserted inside the bushing. The details of the track link structure 100 are shown in the aforementioned paragraph and will not be described herein again.

In detail, the master link structure 300 includes a first opening 310 and a second opening 320. The pin of one of the track pin assemblies is inserted into the first opening 310 from an outer surface 301 of the master link structure 300. The pin of another one of the track pin assemblies is inserted into the second opening 320 from the outer surface 301 of the master link structure 300, and the first opening 310 and the second opening 320 are separated from each other.

In particular, in the track link assembly 200, the track link structure 100 is connected to the master link structure 300 by the track pin assemblies. When the inner surface 102 of the track link structure 100 is opposite to an inner surface 302 of the master link structure 300, the one of the track pin assemblies can pass through the first shaft hole 131 from the outer surface 101 of the track link structure 100 and then be disposed in the first opening 310 of the master link structure 300, and the another one of the track pin assemblies can pass through the second shaft hole 151 from the outer surface 101 of the track link structure 100 and then be disposed in the second opening 320 of the master link structure 300.

As shown in Fig. 3, the master link structure 300 can further include two penetrating holes 330. The two penetrating holes 330 are separately disposed at an upper surface 303 of the master link structure 300, wherein a fastener (not shown) can be applied to each of the penetrating holes 330 so as to fix a track shoe pad (not shown) to the upper surface 303 of the master link structure 300, and then the convenience of the replacement of the track shoe pad can be enhanced.

The master link structure 300 can further include an extending structure (not shown) and a slotted structure 340. The extending structure can surround outside of the first opening 310 and protrude from the outer surface 301 of the master link structure 300, so that the structure strength of the first opening 310 can be enhanced. The slotted structure 340 is recessed on the inner surface 302 of the master link structure 300, and the slotted structure 340 can be communicated with the first opening 310. Therefore, the connection stability between the track link structure 100 and the master link structure 300 can be enhanced. Further, two ends of the bushing of the one of the track pin assemblies can be respectively accommodated in the groove structure (not shown) of the track link structure 100 and the slotted structure 340 of the master link structure 300. Hence, it is favorable for preventing the risk of displacement due to the rotation of the bushing, but the present disclosure is not limited thereto.

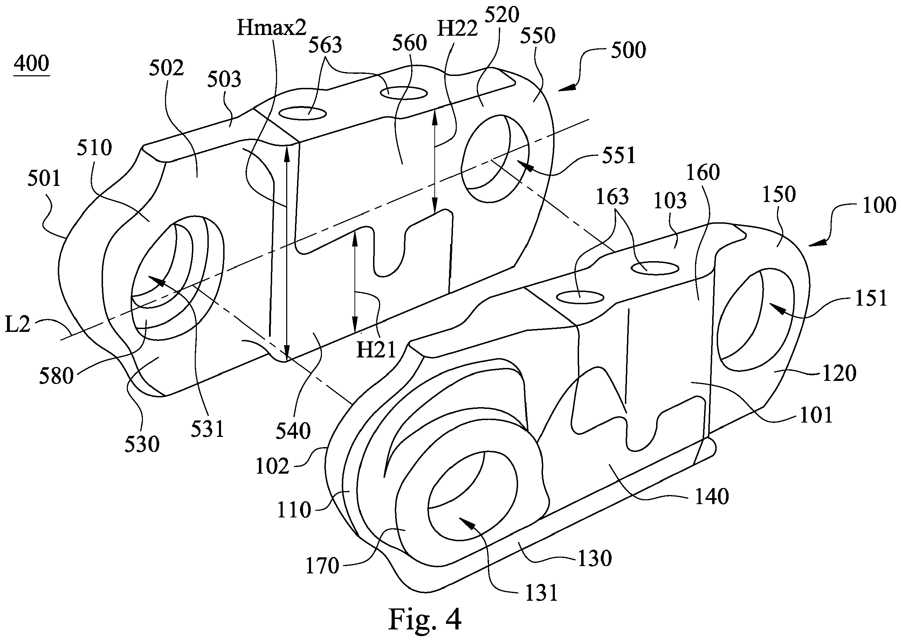

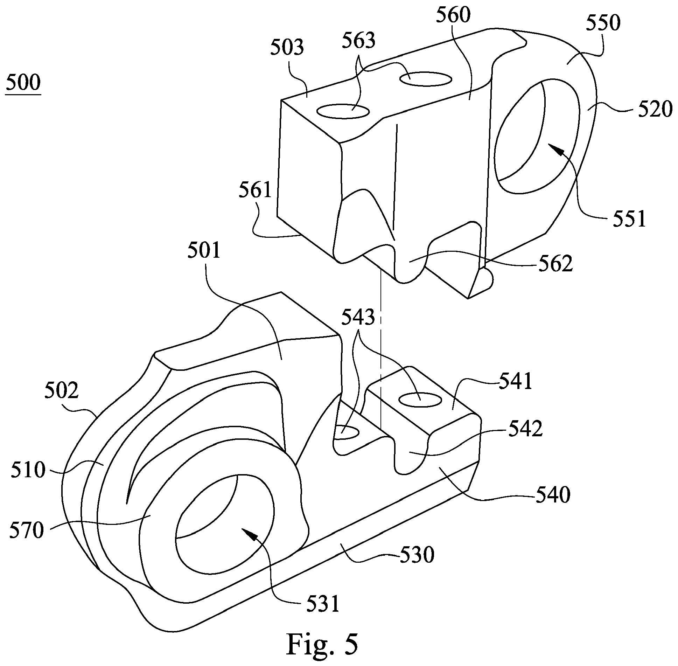

Reference is made to Fig. 4 to Fig. 6. Fig. 4 is a partial schematic view of a track link assembly 400 according to the third embodiment of the present disclosure. Fig. 5 is an exploded view of a master link structure 500 of Fig. 4. Fig. 6 is a partial schematic view of a track link structure 100 and the master link structure 500 of the track link assembly 400 of Fig. 4. The track link assembly 400 includes at least two track pin assemblies 410, at least one of the track link structure 100 according to the aforementioned embodiment, and at least one master link structure 500, wherein only one of the track pin assemblies 410 is shown in Fig. 6. In detail, the number of sections required for the track link assembly 400 can be selected based on the actual usage conditions, and only one section of the track link assembly 400 is shown in Fig. 4.

In the track link assembly 400, each of the track pin assemblies 410 includes a bushing 411 and a pin 412, and the pin 412 is inserted inside the bushing 411, wherein the shape of the bushing 411 can substantially be a hollow cylinder, and the bushing 411 can be rotated relative to the pin 412. Therefore, the pin 412 can be driven to rotate by the force applied on the bushing 411 so as to facilitate the movement of the heavy caterpillar vehicle on the ground.

The details of the track link structure 100 are shown in the aforementioned paragraph and will not be described herein again.

As shown in Fig. 4 to Fig. 6, the master link structure 500 has an outer surface 501 and an inner surface 502, and the master link structure 500 includes a first master link mainbody 510 and a second master link mainbody 520.

The first master link mainbody 510 includes a first master link portion 530 and a first binding portion 540. The first master link portion 530 includes a first opening 531, wherein the first opening 531 is penetrated from the outer surface 501 toward the inner surface 502 of the master link structure 500 and then is disposed on the first master link portion 530 so as to facilitate the connection between the master link structure 500 and the track link structure 100. The first binding portion 540 is integrally connected to the first master link portion 530, wherein a height H21 of the first binding portion 540 perpendicular to a major axis L2 of the master link structure 500 is smaller than a maximum height Hmax2 of the master link structure 500. Therefore, the structural stability of the master link structure 500 during the use thereof can be enhanced.

As shown in Fig. 5, the first binding portion 540 includes a first planar structure 541 and a first binding structure 542. The first planar structure 541 is disposed on a top surface (its reference numeral is omitted) of the first binding portion 540, wherein the first planar structure 541 is parallel to an upper surface 503 of the master link structure 500. The first binding structure 542 is integrally disposed on the first planar structure 541.

The second master link mainbody 520 includes a second master link portion 550 and a second binding portion 560. The second master link portion 550 includes a second opening 551, wherein the second opening 551 is penetrated from the outer surface 501 toward the inner surface 502 of the master link structure 500 and then is disposed on the second master link portion 550 so as to facilitate the connection between the master link structure 500 and the track link structure 100. As shown in Fig. 4, the second binding portion 560 is integrally connected to the second master link portion 550, wherein a height H22 of the second binding portion 560 perpendicular to the major axis L2 of the master link structure 500 is smaller than the maximum height Hmax2 of the master link structure 500. Therefore, the structural stability of the master link structure 500 during the use thereof can be enhanced.

Further, as shown in Fig. 5, the second binding portion 560 includes a second planar structure 561 and a second binding structure 562. The second planar structure 561 is disposed on a bottom surface (its reference numeral is omitted) of the second binding portion 560, wherein the second planar structure 561 is parallel to a lower surface (its reference numeral is omitted) of the master link structure 500, and the lower surface is parallel to the upper surface 503. The second binding structure 562 is integrally disposed on the second planar structure 561.

Particularly, in the master link structure 500, the first binding portion 540 is correspondingly connected to the second binding portion 560 so as to assemble the first master link mainbody 510 and the second master link mainbody 520 to form the master link structure 500, wherein the first binding portion 540 is connected to the second binding portion 560 by the first binding structure 542 and the second binding structure 562, and the first binding structure 542 matches the second binding structure 562. In the master link structure 500, the first binding structure 542 can be a groove element, and the second binding structure 562 can be a block element. When the first binding portion 540 is correspondingly connected to the second binding portion 560, the second binding structure 562 is engaged with the first binding structure 542. Further, the first binding structure 542 and the second binding structure 562 are similar in structures to the first connecting structure 142 and the second connecting structure 162 shown in Fig. 2, so that the details of the same elements are not described herein. Therefore, by the arrangement that the master link structure 500 includes the first master link mainbody 510 and the second master link mainbody 520, the convenience of the disassembly process of the track link assembly including the master link structure 500 can be improved, thereby facilitating the repair or the maintenance of the heavy caterpillar vehicles.

Furthermore, although it is not shown in the figures, in other embodiments, the first binding structure can be a block element, and the second binding structure can be a groove element, so that when the first binding portion is correspondingly connected to the second binding portion, the first binding structure can be engaged with the second binding structure, but the present disclosure is not limited thereto.

As shown in Fig. 4 and Fig. 6, in the track link assembly 400, the track link structure 100 is connected to the master link structure 500 by the track pin assemblies 410. In detail, when the inner surface 102 of the track link structure 100 is opposite to the inner surface 502 of the master link structure 500, the one of the track pin assemblies 410 can pass through the first shaft hole 131 from the outer surface 101 of the track link structure 100 and then be disposed in the first opening 531 of the master link structure 500, and another one of the track pin assemblies 410 can pass through the second shaft hole 151 from the outer surface 101 of the track link structure 100 and then be disposed in the second opening 551 of the master link structure 500.

As shown in Fig. 6, when the track link structure 100 is connected to the master link structure 500, the first inclined plane structure 141 will correspond to the first planar structure 541 and present the arrangement in which an inclined plane and a plane are disposed side by side. Thus, the shaking conditions, such as the relative displacement of the track link structure 100 and the master link structure 500 due to the influence of external forces during the use of the track link assembly 400 can be reduced, and the structural strength and the usage safety of the track link assembly 400 can be enhanced.

Further, as shown in Fig. 4, when the first binding portion 540 is correspondingly connected to the second binding portion 560, the height H21 of the first binding portion 540 perpendicular to the major axis L2 of the master link structure 500, the height H22 of the second binding portion 560 perpendicular to the major axis L2 of the master link structure 500 and the maximum height Hmax2 of the master link structure 500 can satisfy the following condition: H21 + H22 ≤ Hmax2. Therefore, the structural stability of the master link structure 500 can be enhanced, and a surface of the master link structure 500 can be tightly contacted with a track shoe pad so as to reduce the possibility of breakage of the track link assembly 400 during the operation of the heavy caterpillar vehicles. Preferably, the following condition can be satisfied: H21 + H22 = Hmax2. Thus, a top surface (its reference numeral is omitted) of the second binding portion 560 is located on the same plane as the upper surface 503 of the master link structure 500, and it is favorable for the installation of the track shoe pad.

Furthermore, when the maximum height Hmax1 of the track link structure 100 is the same as the maximum height Hmax2 of the master link structure 500, and the track shoe pad is assembled to the track link structure 100 and the master link structure 500, there is without a height difference between different parts of the track shoe pad relative to the track link assembly 400, so that the usage safety of the track link assembly 400 can be enhanced.

As shown in Fig. 5, the first binding portion 540 can further include two opening slots 543, and the two opening slots 543 are separately opened on the top surface of the first binding portion 540. The second binding portion 560 can further include two penetrating holes 563, and the two penetrating holes 563 are penetratingly disposed at the second binding portion 560, wherein the two penetrating holes 563 are separately penetrated from the top surface of the second binding portion 560 toward the bottom surface of the second binding portion 560 and then are disposed on the second binding portion 560, and the two penetrating holes 563 respectively correspond to the two opening slots 543.

Further, the opening slots 543 and the penetrating holes 563 are similar in structures to the hole slots 143 and the through holes 163 shown in Fig. 2, so that the details of the same elements are not described herein.

As shown in Fig. 4 and Fig. 5, the first master link mainbody 510 can further include an extending structure 570 and a slotted structure 580. The extending structure 570 can surround outside of the first opening 531 and protrude from the outer surface 501 of the master link structure 500, so that the structure strength of the first opening 531 can be enhanced. The slotted structure 580 is recessed on the inner surface 502 of the master link structure 500, and the slotted structure 580 can be communicated with the first opening 531. Therefore, by the arrangement that the first master link mainbody 510 includes the extending structure 570 and the slotted structure 580, the connection stability between the master link structure 500 and the track link structure 100 can be enhanced.

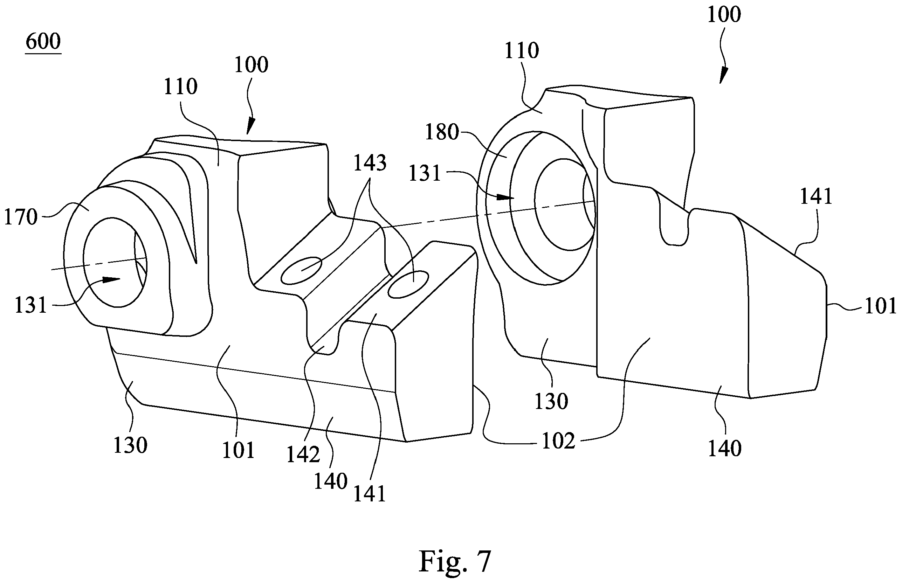

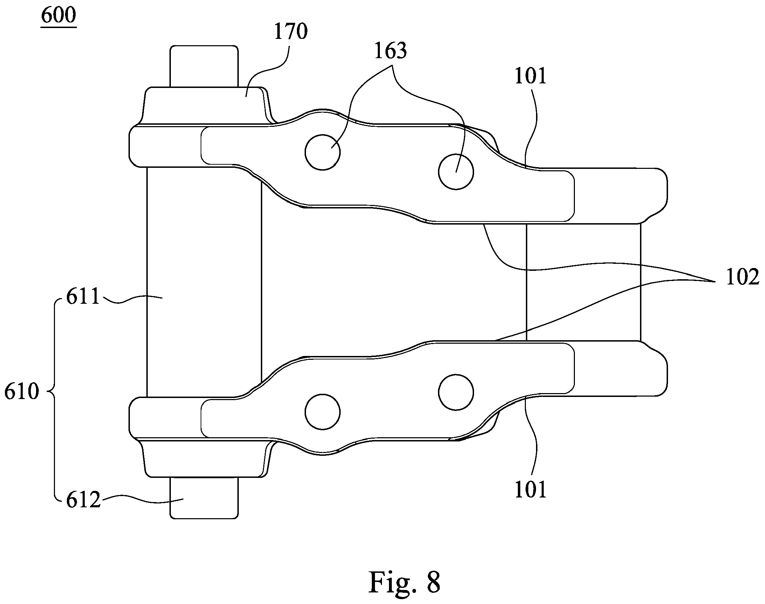

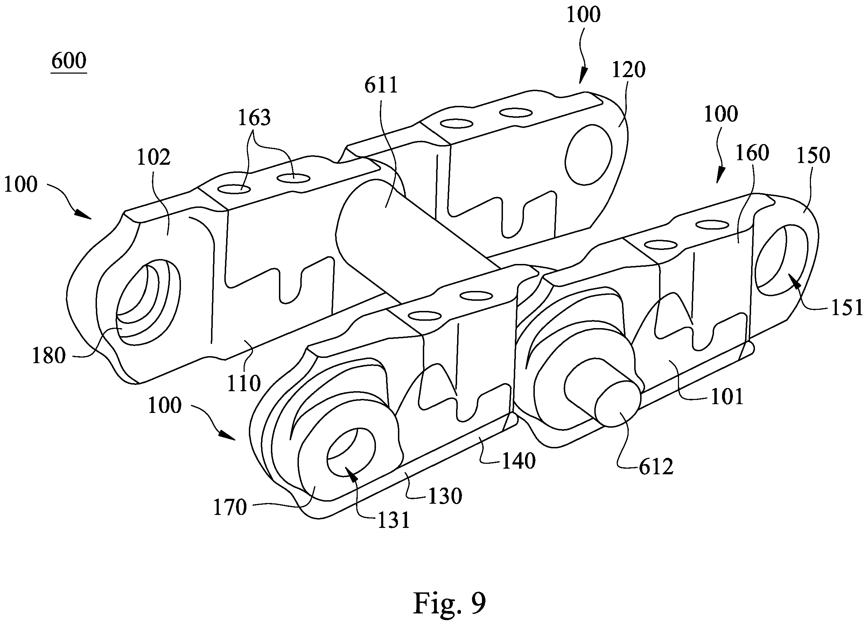

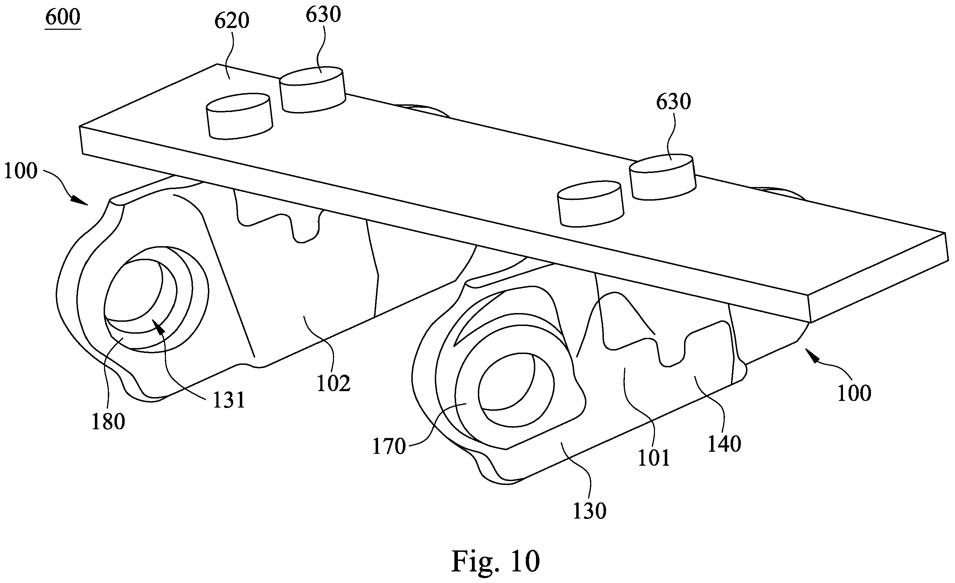

Reference is made to Fig. 7 to Fig. 10. Fig. 7 is a partial schematic view of a track link assembly 600 according to the fourth embodiment of the present disclosure. Fig. 8 is another partial schematic view of the track link assembly 600 of Fig. 7. Fig. 9 is further another partial schematic view of the track link assembly 600 of Fig. 7. Fig. 10 is a partial assembling schematic view of the track link assembly 600 of Fig. 7. The track link assembly 600 includes at least two track pin assemblies 610 and at least two of the track link structures 100 according to the aforementioned embodiment, wherein only one of the track pin assemblies 610 is shown in Fig. 8 and Fig. 9. In detail, the number of sections required for the track link assembly 600 can be selected based on the actual usage conditions, and only one section or two sections of the track link assembly 600 are shown in Fig. 7 to Fig. 10.

As shown in Fig. 8, each of the track pin assemblies 610 includes a bushing 611 and a pin 612, and the pin 612 is inserted inside the bushing 611, wherein the shape of the bushing 611 can substantially be a hollow cylinder, and the bushing 611 can be rotated relative to the pin 612. Therefore, the pin 612 can be driven to rotate by the force applied on the bushing 611 so as to facilitate the movement of the heavy caterpillar vehicle on the ground.

The details of the track link structure 100 are shown in the aforementioned paragraph and will not be described herein again.

As shown in Fig. 7, in the track link assembly 600, when the inner surfaces 102 of the two track link structures 100 are opposite, the first inclined plane structure 141 of one of the track link structures 100 can be tilted from the inner surface 102 of the one of the track link structures 100 toward the outer surface 101 of the one of the track link structures 100, and the first inclined plane structure 141 of another one of the track link structures 100 can be tilted from the inner surface 102 of the another one of the track link structures 100 toward the outer surface 101 of the another one of the track link structures 100, so that the two first inclined plane structures 141 are correspondingly arranged in an inverted V-shape in the track link assembly 600. Therefore, the structural stability of the track link assembly 600 can be enhanced, and the risk of deformation and breakage of fasteners caused by the relative displacement and other shaking phenomena between the first mainbody 110 and the second mainbody 120 of the two track link structures 100 during the operation of the heavy caterpillar vehicles can be prevented.

Further, an inclined angle of the first inclined plane structure 141 of the one of the track link structures 100 can be the same as an inclined angle of the first inclined plane structure 141 of the another one of the track link structures 100. Thus, the first connecting structures 142 of the two track link structures 100 are subjected to equal forces, and the stresses they bear upon each other can be offset when external forces are applied, so that the structural stability of the track link assembly 600 can be further enhanced, but the present disclosure is not limited thereto.

Furthermore, the first connecting structure 142 of the one of the track link structures 100 can be a groove element, the second connecting structure 162 of the one of the track link structures 100 can be a block element, the first connecting structure 142 of the another one of the track link structures 100 can be a groove element, and the second connecting structure 162 of the another one of the track link structures 100 can be a block element. Therefore, the internal stresses of the track link structures 100 can be concentrated on the first connecting structures 142, so that the risk of disconnection between the first mainbody 110 and the second mainbody 120 during the use of the track link assembly 600 can be reduced.

In particular, one of the track link structures 100 is connected to another one of the track link structures 100 by the track pin assemblies 610. When the inner surfaces 102 of the two track link structures 100 are opposite, two ends of the bushing 611 of one of the track pin assemblies 610 are respectively accommodated in the groove structure 180 of the one of the track link structure 100 and the groove structure 180 of the another one of the track link structure 100, and the pin 612 of the one of the track pin assemblies 610 can pass through the first shaft hole 131 of the one of the track link structures 100 from the outer surface 101 of the one of the track link structures 100 and then be disposed in the first shaft hole 131 of the another one of the track link structures 100. Further, two ends of the bushing 611 of another one of the track pin assemblies 610 are respectively disposed in the second shaft hole 151 of the one of the track link structures 100 and the second shaft hole 151 of the another one of the track link structures 100, and the pin 612 of the another one of the track pin assemblies 610 can pass through the second shaft hole 151 of the one of the track link structures 100 from the outer surface 101 of the one of the track link structures 100 and then be disposed in the second shaft hole 151 of the another one of the track link structures 100.

As shown in Fig. 9, four track link structures 100 can be connected by one of the track pin assemblies 610. In detail, the inner surface 102 of one of the four track link structures 100 is opposite to the outer surface 101 of another one of the four track link structures 100, and the first shaft hole 131 of the one of the four track link structures 100 is aligned with the second shaft hole 151 of the another one of the four track link structures 100. When one end of the bushing 611 passes through the second shaft hole 151 of the another one of the four track link structures 100, the one end of the bushing 611 will be accommodated in the groove structure 180 of the one of the four track link structures 100. When the other end of the bushing 611 passes through the second shaft hole 151 of a further one of the four track link structures 100, the other end of the bushing 611 will be accommodated in the groove structure 180 of the other of the four track link structures 100. Thus, the pin 612 can pass through the bushing 611 from the outer surface 101 of the one of the four track link structures 100 to connect the four track link structures 100 together, and the plurality of track link structures can be connected in series to assemble the track link assembly 600.

As shown in Fig. 10, the track link assembly 600 can further include at least one track shoe pad 620 and at least two fasteners 630. In the embodiment of Fig. 10, the number of the fasteners 630 is four, the track shoe pad 620 includes four assembling holes (not shown), and the track shoe pad 620 is disposed on top surfaces (its reference numeral is omitted) of the two track link structures 100 by the fasteners 630. In detail, the fasteners 630 pass through the assembling holes of the track shoe pad 620 and then sequentially enter the through holes 163 of the second connecting portion 160 and the hole slots 143 of the first connecting portion 140. Thus, the track shoe pad 620 can be stably assembled to the two track link structures 100, and the first connecting portion 140 and the second connecting portion 160 of each of the two track link structures 100 can be fastened together by the fasteners 630.

According to the aforementioned embodiments, the present disclosure has the advantages described bellowing.

First, by the arrangement that the track link structure includes the first mainbody and the second mainbody, the convenience of the disassembly process of the track link assembly can be improved, and the replacement costs can be reduced.

Second, by the arrangement that the first inclined plane structures of at least two of the track link structures are tilted from the outer surfaces toward the inner surfaces of the track link structures or from the inner surfaces toward the outer surfaces of the track link structures, the structural stability of the track link assembly can be improved, and the risk of deformation and breakage of the fasteners caused by the relative displacement and other shaking phenomena between the first mainbody and the second mainbody during the operation of the heavy caterpillar vehicles can be reduced. Thus, the service life of the track link structure and the track link assembly can be extended.

Third, by the arrangement that both the first inclined plane structures and the second inclined plane structures of the at least two of the track link structures are tilted from the inner surfaces toward the outer surfaces of the track link structures, the structural stability of the track link assembly can be further enhanced, and the risk of deformation and breakage of the fasteners caused by the relative displacement and other shaking phenomena between the first mainbody and the second mainbody can be prevented. Thus, the service life of the track link structure and the track link assembly can be extended.

Fourth, by the arrangement that the second connecting portion includes the through holes, and the first connecting portion includes the hole slots, the fasteners can be directly disposed in the through holes and the hole slots, and an additional auxiliary fixing element is unrequired.

**Claims**

1. A track link structure (100), which has an outer surface (101) and an inner surface (102), **characterized in** comprising:

   a first mainbody (110), comprising:

      a first track link portion (130) comprising a first shaft hole (131); and
      a first connecting portion (140) integrally connected to the first track link portion (130), wherein a height (H11) of the first connecting portion (140) perpendicular to a major axis (L1) of the track link structure (100) is smaller than a maximum height (Hmax1) of the track link structure (100), and the first connecting portion (140) comprises:

         a first inclined plane structure (141) disposed on a top surface of the first connecting portion (140); and
         a first connecting structure (142) integrally disposed on the first inclined plane structure (141); and

   a second mainbody (120), comprising:

      a second track link portion (150) comprising a second shaft hole (151); and
      a second connecting portion (160) integrally connected to the second track link portion (150), wherein a height (H12) of the second connecting portion (160) perpendicular to the major axis (L1) of the track link structure (100) is smaller than the maximum height (Hmax1) of the track link structure (100), and the second connecting portion (160) comprises:

         a second inclined plane structure (161) disposed on a bottom surface of the second connecting portion (160); and
         a second connecting structure (162) integrally disposed on the second inclined plane structure (161);

      wherein the first inclined plane structure (141) is tilted from the outer surface (101) toward the inner surface (102) or from the inner surface (102) toward the outer surface (101), and the second inclined plane structure (161) is tilted from the outer surface (101) toward the inner surface (102) or from the inner surface (102) toward the outer surface (101);

wherein the first connecting portion (140) is correspondingly connected to the second connecting portion (160) so as to assemble the first mainbody (110) and the second mainbody (120) to form the track link structure (100), the first inclined plane structure (141) corresponds to the second inclined plane structure (161), and the first connecting structure (142) matches the second connecting structure (162).

2.    The track link structure (100) of claim 1, wherein when the first connecting portion (140) is correspondingly connected to the second connecting portion (160), the height of the first connecting portion (140) perpendicular to the major axis (L1) of the track link structure (100) is H11, the height of the second connecting portion (160) perpendicular to the major axis (L1) of the track link structure (100) is H12, the maximum height of the track link structure (100) is Hmax1, and the following condition is satisfied:

$$H11 + H12 \leq Hmax1.$$

3.    The track link structure (100) of claims 1 or 2, wherein the first connecting structure (142) is a groove element, the second connecting structure (162) is a block element, and when the first connecting portion (140) is correspondingly connected to the second connecting portion (160), the second connecting structure (162) is engaged with the first connecting structure (142).

4.    The track link structure (100) of claims 1 or 2, wherein the first connecting structure (142) is a block element, the second connecting structure (162) is a groove element, and when the first connecting portion (140) is correspondingly connected to the second connecting portion (160), the first connecting structure (142) is engaged with the second connecting structure (162).

5.    The track link structure (100) of any one of claims 1 to 4, wherein:

the first connecting portion (140) further comprises two hole slots (143), and the two hole slots (143) are separately opened on the top surface of the first connecting portion (140); and
the second connecting portion (160) further comprises two through holes (163), the two through holes (163) are penetratingly disposed at the second connecting portion (160), and the two through holes (163) correspond to the two hole slots (143).

6.    The track link structure (100) of any one of claims 1 to 5, wherein the first mainbody (110) further comprises:

a protruding structure (170) integrally disposed on the first track link portion (130), wherein the protruding structure (170) surrounds outside of the first shaft hole (131) and protrudes from the outer surface (101).

7.    The track link structure (100) of any one of claims 1 to 6, wherein the first mainbody (110) further comprises:

a groove structure (180) recessed on the inner surface (102), and the groove structure (180) communicated with the first shaft hole (131).

8.    The track link structure (100) of any one of claims 1 to 7, wherein the first inclined plane structure (141) is tilted from the inner surface (102) toward the outer surface (101), and the second inclined plane structure (161) is tilted from the inner surface (102) toward the outer surface (101).

9.    A track link assembly (200), **characterized in** comprising:

at least two track pin assemblies (410), wherein each of the track pin assemblies (410) comprises a bushing (411) and a pin (412), and the pin (412) is inserted inside the bushing (411);
at least one of the track link structure (100) of any one of claims 1 to 8; and
at least one master link structure (300), comprising:

a first opening (310), wherein the pin (412) of one of the track pin assemblies (410) is inserted into the first opening (310) from an outer surface (301) of the master link structure (300); and
a second opening (320), wherein the pin (412) of another one of the track pin assemblies (410) is inserted into the second opening (320) from the outer surface (301) of the master link structure (300), and the first opening (310) and the second opening (320) are separated from each other;

wherein the one of the track pin assemblies (410) passes through the first shaft hole (131) from the outer surface (101) of the track link structure (100) and then is disposed in the first opening (310) of the master link structure (300), and the another one of the track pin assemblies (410) passes through the second shaft hole (151) from the outer surface (101) of the track link structure (100) and then is disposed in the second opening (320) of the master link structure (300).

**10.** The track link assembly (200) of claim 9, wherein the master link structure (300) further comprises:

a first master link mainbody (510), comprising:

a first master link portion (530), wherein the first opening (310) is disposed on the first master link portion (530); and
a first binding portion (540) integrally connected to the first master link portion (530), wherein a height (H21) of the first binding portion (540) perpendicular to a major axis (L2) of the master link structure (300) is smaller than a maximum height (Hmax2) of the master link structure (300), and the first binding portion (540) comprises:

a first planar structure (541) disposed on a top surface of the first binding portion (540), wherein the first planar structure (541) is parallel to an upper surface (303) of the master link structure (300); and
a first binding structure (542) integrally disposed on the first planar structure (541); and

a second master link mainbody (520), comprising:

a second master link portion (550), wherein the second opening (320) is disposed on the second master link portion (550); and
a second binding portion (560) integrally connected to the second master link portion (550), wherein a height (H22) of the second binding portion (560) perpendicular to the major axis (L2) of the master link structure (300) is smaller than the maximum height (Hmax2) of the master link structure (300), and the second binding portion (560) comprises:

a second planar structure (561) disposed on a bottom surface of the second binding portion (560), wherein the second planar structure (561) is parallel to a lower surface of the master link structure (300); and
a second binding structure (562) integrally disposed on the second planar structure (561);

wherein the first binding portion (540) is correspondingly connected to the second binding portion (560) so as to assemble the first master link mainbody (510) and the second master link mainbody (520) to form the master link structure

(300), and the first binding structure (542) matches the second binding structure (562).

**11.** The track link assembly (200) of claim 10, wherein when the first binding portion (540) is correspondingly connected to the second binding portion (560), the height of the first binding portion (540) perpendicular to the major axis (L2) of the master link structure (300) is H21, the height of the second binding portion (560) perpendicular to the major axis (L2) of the master link structure (300) is H22, the maximum height of the master link structure (300) is Hmax2, and the following condition is satisfied:

$$H21 + H22 \leq Hmax2.$$

**12.** The track link assembly (200) of claims 10 or 11, wherein the first binding structure (542) is a groove element, the second binding structure (562) is a block element, and when the first binding portion (540) is correspondingly connected to the second binding portion (560), the second binding structure (562) is engaged with the first binding structure (542).

**13.** The track link assembly (200) of claims 10 or 11, wherein the first binding structure (542) is a block element, the second binding structure (562) is a groove element, and when the first binding portion (540) is correspondingly connected to the second binding portion (560), the first binding structure (542) is engaged with the second binding structure (562).

**14.** The track link assembly (200) of any one of claims 10 to 13, wherein:

the first binding portion (540) further comprises two opening slots (543), and the two opening slots (543) are separately opened on the top surface of the first binding portion (540); and
the second binding portion (560) further comprises two penetrating holes (330), the two penetrating holes (330) are penetratingly disposed at the second binding portion (560), and the two penetrating holes (330) correspond to the two opening slots (543).

**15.** The track link assembly (200) of any one of claims 9 to 14, wherein the master link structure (300) further comprises:
an extending structure (570) surrounding outside of the first opening (310) and protruding from the outer surface (301) of the master link structure (300).

**16.** The track link assembly (200) of any one of claims 9 to 15, wherein the master link structure (300) further comprises:

a slotted structure (340) recessed on an inner surface (302) of the master link structure (300), and the slotted structure (340) communicated with the first opening (310).

17. A track link assembly (200), **characterized in** comprising:

at least two track pin assemblies (410), wherein each of the track pin assemblies (410) comprises a bushing (411) and a pin (412), and the pin (412) is inserted inside the bushing (411); and at least two of the track link structures (100) of any one of claims 1 to 8;

wherein one of the track pin assemblies (410) passes through the first shaft hole (131) of one of the track link structures (100) from the outer surface (101) of the one of the track link structures (100) and then is disposed in the first shaft hole (131) of another one of the track link structures (100), and another one of the track pin assemblies (410) passes through the second shaft hole (151) of the one of the track link structures (100) from the outer surface (101) of the one of the track link structures (100) and then is disposed in the second shaft hole (151) of the another one of the track link structures (100).

18. The track link assembly (200) of claim 17, wherein the first connecting structure (142) of the one of the track link structures (100) is a groove element, the second connecting structure (162) of the one of the track link structures (100) is a block element, the first connecting structure (142) of the another one of the track link structures (100) is the groove element, and the second connecting structure (162) of the another one of the track link structures (100) is the block element.

19. The track link assembly (200) of claims 17 or 18, wherein the first inclined plane structure (141) of the one of the track link structures (100) is tilted from the inner surface (102) toward the outer surface (101) of the one of the track link structures (100), and the first inclined plane structure (141) of the another one of the track link structures (100) is tilted from the inner surface (102) toward the outer surface (101) of the another one of the track link structures (100).

20. The track link assembly (200) of any one of claims 17 to 19, wherein an inclined angle of the first inclined plane structure (141) of the one of the track link structures (100) is the same as an inclined angle of the first inclined plane structure (141) of the another one of the track link structures (100).

Fig. 1

Fig. 2

Fig. 3

Fig. 4

Fig. 5

EP 4 458 653 A1

Fig. 6

EP 4 458 653 A1

Fig. 7

EP 4 458 653 A1

600

170   163   101

611

610

612

102

101

EP 4 458 653 A1

21

Fig. 8

Fig. 9

Fig. 10

EP 4 458 653 A1

Europäisches
Patentamt

European
Patent Office

Office européen
des brevets

# EUROPEAN SEARCH REPORT

Application Number

EP 24 17 0922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 41 03 424 A1 (GOLD STAR CABLE CO LTD [KR]) 22 August 1991 (1991-08-22) * column 2, line 36 - column 3, line 25; figures 1,2 * | 1-20 | INV. B62D55/21 |
| A | US 3 096 661 A (REINSMA HAROLD L ET AL) 9 July 1963 (1963-07-09) * column 1, line 54 - column 4, line 28; figures 4,5 * | 1-20 | |
| A | US 6 412 887 B1 (KETTING MICHAEL [DE] ET AL) 2 July 2002 (2002-07-02) * column 3, line 10 - column 4, line 12; figure 1 * | 1-20 | |

TECHNICAL FIELDS
SEARCHED      (IPC)

B62D

The present search report has been drawn up for all claims

| Place of search | Date of completion of the search | Examiner |
|---|---|---|
| The Hague | 19 September 2024 | Burley, James |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**                    EP 24 17 0922

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | | Publication date | Patent family member(s) | | Publication date |
|---|---|---|---|---|---|
| DE 4103424 | A1 | 22-08-1991 | DE | 4103424 A1 | 22-08-1991 |
| | | | JP | H07323871 A | 12-12-1995 |
| | | | KR | 910015466 A | 30-09-1991 |
| US 3096661 | A | 09-07-1963 | NONE | | |
| US 6412887 | B1 | 02-07-2002 | BR | 0004992 A | 07-08-2001 |
| | | | CN | 1294070 A | 09-05-2001 |
| | | | DE | 29918683 U1 | 30-12-1999 |
| | | | EP | 1093996 A2 | 25-04-2001 |
| | | | JP | 2001182781 A | 06-07-2001 |
| | | | KR | 20010051192 A | 25-06-2001 |
| | | | US | 6412887 B1 | 02-07-2002 |

EPO FORM P0459

For more details about this annex : see Official Journal of the European Patent Office, No. 12/82